# EUROPÄISCHE PATENTANMELDUNG

(11) **EP 4 610 201 A1**
(43) Veröffentlichungstag der Anmeldung: **03.09.2025**
(21) Anmeldenummer: 24160310.9
(22) Anmeldetag: 28.02.2024
(51) Int. Cl.: B65G 47/248, B65G 47/52, B65G 47/84, B08B 9/20

(54) **ANLAGE UND VERFAHREN ZUM TRANSPORT VON BEHÄLTERN**

(71) Anmelder: Rotzinger PharmaPack GmbH, 71332 Waiblingen (DE)
(72) Erfinder: Jansen, Frank, 47804 Krefeld (DE)
(74) Vertreter: Braunpat AG

(57) **Zusammenfassung**

Eine Transportanlage zum Transport von Behältern (1) weist zumindest eine erste Fördereinrichtung (10) und eine zweite Fördereinrichtung (20) zum Fördern von Behältern (1) auf. Die erste und die zweite Fördereinrichtung (10, 20) verlaufen in einem Parallelabschnitt (5) zumindest teilweise parallel nebeneinander. Eine Transfereinrichtung (30) zum Transfer von Behältern (1) von der ersten Fördereinrichtung (10) zur zweiten Fördereinrichtung (20) weist wenigstens eine Behälteraufnahme (32, 36) mit einer Drehachse (34, 38) auf. Die Behälteraufnahme (32, 36) ist zum lösbaren Erfassen wenigstens eines Behälters (1) ausgebildet. Die Drehachse (34, 38) verläuft parallel einer Förderrichtung der Fördereinrichtungen (10, 20). Der wenigstens eine Behälter (1) wird von einer Behälteraufnahme (32, 36) in einer aufrechten Stellung oder einer Umkehrstellung an der ersten Fördereinrichtung (10) erfasst und um die Drehachse (34, 38) gedreht und in einer Umkehrstellung, bzw. einer aufrechten Stellung an die zweite Fördereinrichtung (20) abgegeben.

## Beschreibung

### Technisches Gebiet der Erfindung

Die Erfindung betrifft eine Transportanlage und ein Verfahren für den Transport von Behältern von einer Einheit zur Be- und/oder Verarbeitung zu einer weiteren Einheit zur Be- und/oder Verarbeitung der Behälter, wobei die Transportanlage zumindest eine erste längliche Fördereinrichtung und eine zweite längliche Fördereinrichtung zum Fördern von Behältern aufweist. Insbesondere betreffen die Transportanlage und das Verfahren den Transport von Behältern für medizinische, pharmazeutische und kosmetische Produkte, vor allem zum Transport von flaschenartigen Behältern mit einer oberen Öffnung.

### Stand der Technik

In der pharmazeutischen Industrie und in verwandten Gebieten werden Erzeugnisse in vollautomatischen Produktionslinien hergestellt und oftmals in Behälter in Form von Flaschen und ähnlichem abgefüllt. Die Produktionslinien umfassen hierfür mehrere meist in Serie hintereinander angeordnete Be- und/oder Verarbeitungseinheiten. Beispielsweise sind Einheiten zur Wirkstoffherstellung, Mischung von Formulierungen, Herstellung von Behältern, Qualitätskontrolle, Reinigung, Befüllung, Wägung, Etikettierung, Verpackung, etc. vorgesehen. Zur Bereitstellung, Befüllung und Verpackung der Behälter werden meist automatisierte Transportanlagen mit mehreren Förderbändern verwendet, welche die Behälter zur Be- und Verarbeitung ausrichten und zwischen den Einheiten, wie etwa, einem Sortierer, einer Reinigungseinheit, Befüllungseinheit, Kontrolleinheit, Etikettiereinheit und Verpackungseinheit transportieren. Eine serielle Anordnung der Förderbänder resultiert jedoch in langen Produktionslinien, die viel Platz beanspruchen und schwer zu überwachen sind.

In EP 3741688 A2 ist diesbezüglich beispielsweise eine Abfüllmaschine mit einem Fördersystem beschrieben, in welcher eine Serie von Behälter in Form von Flaschen zwischen Be- und/oder Verarbeitungseinheiten in Form einer Eingangseinheit, Wägeeinheit, Befüllungseinheit, einer weiteren Wägeeinheit, Verschlusseinheit, Etikettiereinheit und Versiegelungseinheit transportiert werden. Das Fördersystem weist hierfür mehrere in Serie aneinander anschliessende, aber zueinander versetzt angeordnete Förderbänder auf. Dabei werden die Flaschen mittels Transfervorrichtungen von einem Förderband zu einem nächsten Förderband weitergegeben. Die Transfervorrichtungen weisen hierfür wenigstens zwei Fördertrommeln auf, die um eine vertikale Achse drehbar sind und um ihren Umfang mehrere Taschen zur Aufnahme von Flaschen aufweisen. Die Förderbänder und Fördertrommeln sind derart angeordnet, dass eine erste Fördertrommel Flaschen von einem ersten Förderband aufnimmt, diese entlang einer horizontalen Kreisbewegung zu einer zweiten Fördertrommel liefert und an diese abgibt. Die zweite Fördertrommel transportiert die Flaschen entlang einer entgegengesetzten horizontalen Kreisbewegung weiter und gibt sie an ein zweites Förderband ab. Die Flaschen werden daher entlang einer horizontalen, s-förmigen Bewegung von einer Be- und/oder Verarbeitungseinheit zu einer weiteren Be- und/oder Verarbeitungseinheit transportiert. Die Anordnung von Be- und/oder Verarbeitungseinheit ist somit nicht auf eine lineare Abfolge beschränkt. Jedoch benötigt die gesamte Abfüllmaschine weiterhin eine grosse Fläche und umfasst eine Vielzahl von Bauelementen, die unterbruchslos aufeinander abgestimmt werden müssen.

Es ist daher eine Aufgabe der vorliegenden Erfindung, eine Transportanalage und ein Verfahren für den Transport von Behältern, insbesondere von flaschenartigen Behältern, von wenigstens einer ersten Einheit zur Be- und/oder Verarbeitung zu wenigstens einer zweiten Einheit zur Be- und/oder Verarbeitung zu schaffen, die platzsparende Abmessungen ermöglichen, einen kurzen Be- und Verarbeitungsweg unterstützen, einen flexiblen Aufbau erlauben und eine einfache Kontrolle des Transports ermöglichen.

### Zusammenfassung der Erfindung

Diese Aufgabe wird von der Erfindung durch eine Transportanlage für den Transport von Behältern nach Anspruch 1 und ein Verfahren nach Anspruch 16 gelöst. Vorteilhafte Ausgestaltungen und weitere Ausführungsbeispiele sind in den abhängigen Ansprüchen beschrieben.

Eine Transportanlage nach der vorliegenden Erfindung ist für den Transport von Behältern, insbesondere von flaschenartigen Behältern, die in einer aufrechten Stellung eine obere Öffnung zum Ein- und Ausfüllen von Substanzen aufweisen, vorgesehen. Die Transportanlage ist für den Transport der Behälter von wenigstens einer ersten Einheit zur Be- und/oder Verarbeitung eines Behälters zu wenigstens einer zweiten Einheit zur Be- und/oder Verarbeitung eines Behälter ausgelegt. Hierfür weist die Transportanlage zumindest eine erste Fördereinrichtung und eine zweite Fördereinrichtung zum Fördern von Behältern auf. Die Behälter können auf den Fördereinrichtungen beispielsweise in Haltern aufgenommen oder auch einfach auf einer Oberfläche abgestellt sein. Auch kann die erste und/oder die zweite Fördereinrichtung Bestandteil der Be- und/oder Verarbeitungseinheit sein.

Vorzugsweise sind die Fördereinrichtungen als längliche Fördereinrichtung ausgestaltet, welche wenigstens eine geradlinige Förderstrecke umfassen. Vorteilhaft können die Fördereinrichtungen umlaufend ausgestaltet sein, wie es etwa von Förderbändern oder Förderketten bekannt ist. Weiter können die Fördereinrichtungen vorteilhaft derart ausgebildet sein, dass eine Förderrichtung zumindest annähernd horizontal verläuft. Dadurch wird ein Transport von Behältern vereinfacht, da keine Vorkehrungen gegen eine ungewollte Gravitationseinwirkung erforderlich sind. Grundsätzlich kann die Förderrichtung aber auch eine Steigung aufweisen, um beispielsweise an höher oder niedriger gelegene Be- und/oder Verarbeitungseinheiten anzuschliessen. Es ist auch möglich, dass zumindest eine der Fördereinrichtungen mehrere Behälter seriell anordnet und als geradlinige Behälterreihe fördert, wobei mehrere Behälterreihen nacheinander gefördert werden.

Erfindungsgemäss verlaufen die erste und die zweite Fördereinrichtung in einem Parallelabschnitt zumindest teilweise parallel nebeneinander. Die parallelen Abschnitte überlappen in einer Förderrichtung einer Fördereinrichtung. In dem Parallelabschnitt ist zwischen der ersten Fördereinrichtung und der zweiten Fördereinrichtung eine Transfereinrichtung zum Transfer von Behältern von der ersten Fördereinrichtung zur zweiten Fördereinrichtung vorgesehen. Die Transfereinrichtung weist wenigstens eine Behälteraufnahme zum lösbaren Erfassen eines oder mehrerer Behälter und eine Drehachse auf. Beispielsweise weist die wenigstens eine Behälteraufnahme eine Halteinrichtung auf, die zum Halten und Freigeben wenigstens eines Behälters ausgestaltet ist. Die Drehachse der wenigstens einen Behälteraufnahme verläuft parallel zur Förderrichtung wenigstens einer der Fördereinrichtungen. Der eine Behälter oder die mehreren Behälter sind an der ersten Fördereinrichtung vorgesehen und von der Behälteraufnahme erfassbar sowie von der wenigstens einen Behälteraufnahme durch Drehung der Behälteraufnahme um die Drehachse umkehrbar und an die zweite Fördereinrichtung abgebbar.

Bei einer ersten Ausführungsvariante der Transportanlage nach der Erfindung weist die Transfereinrichtung nur eine Behälteraufnahme und eine Drehachse auf. Die Ausführungsvariante ist beispielsweise einsetzbar, wenn Behälter beim Transfer umgekehrt werden sollen. Dabei sind ein oder mehrere Behälter in einer aufrechten Stellung mit einer Behälteröffnung nach oben oder einer Umkehrstellung mit einer Behälteröffnung nach unten an der ersten Fördereinrichtung angeordnet und werden in den Parallelabschnitt der Transportanlage gefördert. Dort werden der oder die Behälter von der Behälteraufnahme in dieser Stellung erfasst. Durch Drehung der Behälteraufnahme um die Drehachse sind der Behälter oder die mehreren Behälter von der aufrechten Stellung, bzw. der Umkehrstellung umkehrbar und in einer Umkehrstellung, bzw. einer aufrechten Stellung an die zweite Fördereinrichtung abgebbar. Dabei entspricht der Abstand der ersten und zweiten Fördereinrichtung im Wesentlichen einem Durchmesser der Drehbewegung, so dass der oder die Behälter von der ersten zur zweiten Fördereinrichtung transferiert werden können.

In einer zweiten Ausführungsvariante weist die Transfereinrichtung eine erste Behälteraufnahme und eine zweite Behälteraufnahme auf, die jeweils zum lösbaren Erfassen wenigstens eines Behälters ausgebildet sind. Die erste Behälteraufnahme weist eine erste Drehachse und die zweite Behälteraufnahme weist eine zweite Drehachse auf. Somit ist die erste Behälteraufnahme um die erste Drehachse und die zweite Behälteraufnahme ist um die zweite Drehachse drehbar gelagert. Ein in der ersten, bzw. zweiten Behälteraufnahme aufgenommener Behälter ist somit ebenfalls um die erste, bzw. zweite Drehachse drehbar. Die erste Drehachse und die zweite Drehachse verlaufen parallel zueinander. Weiter verlaufen die Drehachsen parallel zu einer Förderrichtung im Parallelabschnitt der Fördereinrichtungen. Vorteilhaft sind die Drehachsen somit zumindest überwiegend horizontal ausgerichtet. Die Drehachsen können aber eine gewisse Steigung aufweisen, beispielsweise für einen Fall, in dem die Fördereinrichtungen eine Förderrichtung mit Steigung aufweisen.

Vorteilhaft ist in dieser Ausführungsvariante der Transportanlage zwischen der ersten und der zweiten Behälteraufnahme eine Übergabestation mit wenigstens einer Ablage zum Absetzen des wenigstens einen von der Transfereinrichtung zu transferierenden Behälters vorgesehen. Die Übergabestation bildet eine Zwischenablage beim Transfer eines oder mehrerer Behälter von der ersten Behälteraufnahme zur zweiten Behälteraufnahme.

Bei einem Verfahren zum Transport von Behältern nach der vorliegenden Erfindung wird wenigstens ein Behälter mittels der Transfereinrichtung von zumindest der ersten Fördereinrichtung auf die zweite Fördereinrichtung transferiert. Dabei wird der wenigstens eine Behälter von einer Behälteraufnahme der Transfereinrichtung in einer aufrechten Stellung oder einer Umkehrstellung an der ersten Fördereinrichtung erfasst und um eine Drehachse überkopf gedreht und in einer Umkehrstellung, bzw. einer aufrechten Stellung an die zweite Fördereinrichtung abgegeben.

Bei der zweiten Ausführungsvariante der Transportanlage mit zwei Behälteraufnahmen und einer Übergabestation wird der wenigstens eine Behälter auf der ersten Fördereinrichtung in einer aufrechten Stellung von der ersten Behälteraufnahme der Transfereinrichtung erfasst und um die erste Drehachse überkopf gedreht und auf der Übergabestation in einer Umkehrstellung als Zwischenstellung abgesetzt. Somit steht der Behälter in der umgekehrten Zwischenstellung auf dem Kopf. Anschliessend wird der wenigstens eine Behälter von der zweiten Behälteraufnahme der Transfereinrichtung von der Übergabestation in der umgekehrten Zwischenstellung erfasst und um die zweite Drehachse überkopf gedreht und in einer aufrechten Stellung an die zweite Fördereinrichtung abgegeben. Dabei entspricht der Abstand der ersten und zweiten Fördereinrichtung im Wesentlichen einem Durchmesser der ersten Drehbewegung plus einem Durchmesser der zweiten Drehbewegung, so dass der oder die Behälter von der ersten zur zweiten Fördereinrichtung transferiert werden können.

Somit ist bei der Transportanlage nach der Erfindung der wenigstens eine Behälter von der ersten Behälteraufnahme von der aufrechten Stellung durch Drehung um die erste Drehachse in die umgekehrten Zwischenstellung in der Übergabestation absetzbar und von der zweiten Behälteraufnahme von der umgekehrten Zwischenstellung durch Drehung um die zweite Drehachse in der aufrechten Stellung an die zweite Fördereinrichtung abgebbar.

Bei den Ausführungsvarianten der Transportanlage nach der Erfindung bildet der Parallelabschnitt eine Schnittstelle zwischen der ersten und der zweiten Fördereinrichtung. Die Überlappung der Fördereinrichtungen und die Transfereinrichtung im Bereich des Parallelabschnitts erlauben es, die Gesamtlänge der ersten und der zweiten Fördereinrichtung zu verkürzen. Dabei ist es vorteilhaft, dass die rotierende Transferbewegung der Behälter im Wesentlichen in einer vertikalen Ebene verläuft, um weiter Platz zu sparen. Vorteilhaft verlaufen die Drehungen im Fall von mehreren Behälteraufnahmen in gleicher Richtung. Damit kann der erforderliche Raum für die Transferbewegung klein gehalten werden.

In einer bevorzugten Ausgestaltung der Transportanlage nach der Erfindung weist die wenigstens eine Behälteraufnahme mehrere Halteeinrichtungen entlang der Drehachse zum lösbaren Halten mehrerer Behälter auf. Dabei können die Halteeinrichtungen vorteilhaft zum Erfassen und Freigeben der Behälter relative zur Drehachse beweglich ausgebildet sein. In einer Ausführungsvariante erstreckt sich der Parallelabschnitt über eine Länge von mehreren in Serie auf der Fördereinrichtung geförderten Behältern. Die wenigstens eine Behälteraufnahme weist entsprechend mehrere Halteeinrichtungen für die mehreren in Serie geförderten Behältern entlang der Drehachse auf. Somit können mehrere Behälter gleichzeitig von der ersten Fördereinrichtung zur zweiten Fördereinrichtung transferiert werden. Vorteilhaft entspricht der Parallelabschnitt z. B. einer Länge von 5-20 Behältern, vorzugsweise 5-10 Behältern. Die wenigstens eine Behälteraufnahme weist entsprechend 5-20 Halteeinrichtungen, vorzugsweise 5-10 Halteeinrichtungen auf. Während ein gleichzeitiger Transfer von mehreren Behältern einen effizienten Transport ermöglicht, können die Behälter mittels der Transfereinrichtung aber auch individuell von der ersten zur zweiten Fördereinrichtung transferiert werden, indem die Halteeinrichtungen unabhängig voneinander einen jeweiligen Behälter erfassen und transferieren.

Die Halteeinrichtungen zum lösbaren Halten eines Behälters können z. B. als Greifer mit zueinander beweglichen Greifbacken oder mit einer Saugeinrichtung ausgebildet sein. Die Greifer können einen Behälter zwischen den Greifbacken aufnehmen und durch eine Relativbewegung der Greifbacken erfassen bzw. freigeben. Die Saugeinrichtung kann einen Behälter durch Erzeugen eines Unterdrucks zwischen Behälter und Saugeinrichtung festhalten. Im Falle von Behältern mit Magnetelementen können die Halteeinrichtungen zum magnetischen Halten eines Behälters ausgebildet sein. Beispielweise weisen die Halteeinrichtungen elektromagnetische Elemente auf, die mittels einem elektrischen Steuersignal eine Magnetkraft aktivieren und deaktivieren können.

Vorteilhaft können die Halteeinrichtungen zum lösbaren Halten von Behältern radial in einem Abstand zur Drehachse an der ersten, bzw. zweiten Behälteraufnahme vorgesehen sein. Beispielsweise sind die Halteeinrichtungen jeweils an einem Haltearm angeordnet, der im Wesentlichen radial von der Drehachse absteht. Der Abstand, bzw. Länge des Haltearms, erlaubt eine Abstimmung des Transferwegs der Behälter auf die Auslegung der Transportanlage, insbesondere auf die Positionierung der Fördereinrichtungen. Bei geringem Abstand der Fördereinrichtungen im Parallelbereich wird ein kleiner Abstand der Halteeinrichtungen zur Drehachse und bei einem weiteren Abstand zwischen den Fördereinrichtungen wird ein grosser Abstand der Halteeinrichtungen zur Drehachse gewählt. Vorteilhaft kann der Abstand einer Halteeinrichtung von der Drehachse variiert werden. Beispielsweise durch eine Führung der Halteeinrichtung entlang einem Haltearm oder einem teleskopisch ausgebildeten Haltearm. Der Abstand der Halteeinrichtungen zur Drehachse bestimmt somit den Durchmesser der Drehung der Behälter um die Drehachse der Behälteraufnahme, wie oben beschrieben.

In einer Ausgestaltung der zweiten Ausführungsvariante der Transportanlage nach der Erfindung ist die erste Drehachse mittig zwischen der ersten Fördereinrichtung und der Übergabestation und die zweite Drehachse ist mittig zwischen der Übergabestation und der zweiten Fördereinrichtung angeordnet. Demnach ist ein Abstand zwischen der ersten Fördereinrichtung und der ersten Drehachse der gleiche wie ein Abstand zwischen der ersten Drehachse und der Übergabestation. Das gleiche gilt analog für die zweite Drehachse und die zweite Fördereinrichtung. Ein Transferweg eines Behälters von der ersten Fördereinrichtung zur Übergabestation ist somit der gleiche wie ein Transferweg von der Übergabestation zur zweiten Fördereinrichtung. Dadurch wird die Gestaltung der Transportanlage und deren Betrieb vereinfacht. Alternativ könnte die Übergabestation auch näher an der ersten Fördereinrichtung oder näher an der zweiten Fördereinrichtung vorgesehen sein, beispielsweise, um auf unterschiedliche räumliche Vorgaben oder Erfordernisse einer Produktionslinie einzugehen.

In einer dritten Ausführungsvariante der Transportanlage nach der Erfindung ist eine dritte Fördereinrichtung, die in einem zweiten Parallelabschnitt zumindest teilweise parallel neben der ersten Fördereinrichtung verläuft, und eine zweite Transfereinrichtung zwischen der ersten Fördereinrichtung und der dritten Fördereinrichtung zum Transfer von Behältern von der ersten Fördereinrichtung zur dritten Fördereinrichtung vorgesehen. Der zweite Parallelabschnitt kann beispielsweise nachfolgend zum ersten Parallelabschnitt angeordnet sein, so dass Behälter, die nicht von der ersten Transfereinrichtung transferiert werden, von der zweiten Transfereinrichtung erfasst werden können. Dabei kann der zweite Parallelabschnitt z. B. in gleicher Förderrichtung der Fördereinrichtung wie der erste Parallelabschnitt vorgesehen sein. Oder der zweite Parallelabschnitt kann in einem Bereich der Fördereinrichtung vorgesehen sein, in dem die Förderrichtung umgekehrt ist, wie es beispielsweise bei umlaufenden Fördereinrichtungen möglich ist. Die dritte Fördereinrichtung kann die Behälter zur gleichen oder auch zur selben Be- und/oder Verarbeitungseinheit wie die zweite Fördereinrichtung transportieren oder zu einer anderen Be- und/oder Verarbeitungseinheit, je nach Auslegung der Produktionslinie.

In einer vorteilhaften Ausgestaltung der zweiten Ausführungsvariante der Transportanlage nach der Erfindung ist die wenigstens eine Ablage der Übergabestation für den wenigstens einen Behälter als zumindest überwiegend vertikal verlaufender, zylindrischer, bzw. stiftartiger Halter ausgebildet. Der Behälter kann daher in der umgekehrten Zwischenstellung mit einer nach unten weisenden Öffnung auf den an der Übergabestation nach oben ragenden Halter aufgesetzt werden, so dass der Halter in einen Innenraum des Behälters hineinragt. Der Behälter wird dadurch sicher auf der Übergabestation gehalten und ist zur Aufnahme durch die Behälteraufnahme bereit.

In noch einer weiteren vorteilhaften Ausgestaltung der Transportanlage kann die Übergabestation eine Einheit zur Be- und/oder Verarbeitung aufweisen, in welcher der wenigstens eine Behälter in der umgekehrten Zwischenstellung bearbeitbar ist. Die Übergabestation kann somit als eine Einheit der Produktionslinie ausgestaltet sein, wodurch Platz in der gesamten Produktionslinie gespart wird. Beispielsweise kann die Einheit zur Be- und/oder Verarbeitung als Reinigungseinheit zur Reinigung von Behältern in der umgekehrten Zwischenstellung ausgebildet sein. Hierfür kann die Ablage der Übergabestation beispielsweise wenigstens eine Reinigungsvorrichtung, wie etwa eine Reinigungsdüse aufweisen. Vorteilhaft ist die wenigstens eine Reinigungsdüse zumindest überwiegend nach oben ausgerichtet, sodass ein Reinigungsstrahl aus der Reinigungsdüse in Richtung einer Behälteröffnung eines in der umgekehrten Zwischenstellung abgesetzten Behälters orientiert sein kann. Die Reinigung mittels der Reinigungsdüse kann beispielsweise durch simples Ausblasen erfolgen oder es wird ein Reinigungsmittel in den Behälter eingespritzt. Selbstverständlich kann die Reinigungsvorrichtung für jeden mit der Behälteraufnahme zu transferierenden Behälter eine Reinigungsdüse vorsehen. Vorzugsweise ist die Reinigungsdüse am Ende eines zumindest überwiegend vertikal verlaufenden, zylindrischen oder stiftartigen Halters ausgebildet, der als Ablage der Übergabestation dient, wie oben erwähnt. Vorteilhaft ist die Reinigungsvorrichtung, insbesondere eine Reinigungsdüse, oder der zylindrische Halter beweglich an der Übergabestation gelagert, so dass die Düse relative zum Behälter beweglich ist. Dadurch kann sichergestellt werden, dass alle Bereiche eines Behälters von einer Reinigung erfasst werden können.

Alternativ kann die Übergabestation eine Einheit zur Be- und/oder Verarbeitung aufweisen, die z. B. als Etikettiereinheit oder Wägeeinheit ausgebildet ist. Dabei ist es vorteilhaft, dass die mehreren einzelnen Behälter unabhängig voneinander auf der Übergabestation gelagert sind und sich nicht gegenseitig beeinflussen. Je nach Ausgestaltung der Be- und/oder Verarbeitungseinheit an der Übergabestation kann die Ablage auf Anforderungen der Einheit angepasst werden.

Wie oben geschildert, wird bei dem Verfahren zum Transport von Behältern mittels der Transfereinrichtung nach der Erfindung wenigstens ein Behälter von der ersten Behälteraufnahme in der aufrechten Stellung erfasst und um die erste Drehachse überkopf gedreht. Demnach durchläuft der Behälter eine Drehung um 180° bevor er auf der Ablage der Übergabestation in der umgekehrten Zwischenstellung abgesetzt wird. Die zweite Behälteraufnahme nimmt den wenigstens einen Behälter in der umgekehrten Zwischenstellung von der Übergabestation auf und dreht diesen überkopf in eine aufrechte Stellung. Demnach wird der Behälter durch eine Drehung um weitere 180° gedreht, bevor er an die zweite Fördereinrichtung abgegeben wird.

Bei der ersten Ausführungsvariante der Transportanlage nach der Erfindung kann die erste und/oder die zweite Fördereinrichtung ein Bestandteil einer Einheit zur Be- und/oder Verarbeitung von Behältern in einer Produktionslinie sein. Dabei können die Behälter in einer aufrechten Stellung oder einer Umkehrstellung be- und/oder verarbeitet und von der Fördereinrichtung gefördert werden. Beispielsweise kann die Einheit zur Be- und/oder Verarbeitung als Reinigungseinheit ausgebildet sein, in der die Behälter in einer umgekehrten Stellung gereinigt werden, wie oben beschrieben. Hierfür kann die Fördereinrichtung eine Vielzahl von zumindest überwiegend vertikal verlaufenden, zylindrischen, bzw. stiftartigen Haltern aufweisen, wie oben beschrieben. Die Halter können derart an der Fördereinrichtung angebracht sein, dass sie von dieser in Förderrichtung bewegt werden, sodass die Behälter in der Umkehrstellung in den Parallelbereich gefördert werden können. Dort können die Behälter mittels der Transfereinrichtung auf eine andere Fördereinrichtung transferiert werden. Grundsätzlich können beide oder nur eine der Fördereinrichtungen Bestandteil einer Einheit zur Be- und/oder Verarbeitung der Behälter sein.

Zur Steuerung der Transportanlage kann eine Steuereinrichtung vorgesehen sein, die zumindest an die Transfereinrichtung und vorteilhaft auch an die Fördereinrichtungen angeschlossen ist, um die Transportanlage automatisiert zu steuern. Die Steuereinrichtung kann beispielsweise einen Computer mit einem Steueralgorithmus, eine Eingabeeinheit, wie etwa eine Tastatur, einen Bildschirm, eine Sensorik mit mehreren entlang der Transfereinrichtung verteilt angeordneten Sensoren und dergleichen zur Steuerung notwendige Bauelemente umfassen. Insbesondere wird ein Erfassen und ein Freigeben des wenigstens einen Behälters durch die wenigstens eine Behälteraufnahme automatisiert koordiniert. Dabei werden z. B. die Halteeinrichtungen aktiviert/deaktiviert, wie etwa die Greifbacken oder Saugeinrichtungen von Greifern oder die elektromagnetischen Bauteile von Magnetelementen. Auch kann ein radialer Abstand der Halteeinrichtungen angepasst werden. Weiter wird die Drehung der Behälteraufnahmen um deren jeweilige Drehachse automatisch gesteuert, um die Behälter zu und von den Fördereinrichtungen und der Ablage der Übergabestation zu transferieren. Dabei ist es vorteilhaft, dass jeder Behälter individuell transferiert werden kann. Die Position der Behälter kann mittels der Sensorik erfasst werden, die ein Positionssignal an die Steuerung liefern, die wiederum ein Aktivierungssignal an die Fördereinrichtungen und die Transfereinrichtung sendet.

Weiter kann die Steuereinheit auch an eine Be- und/oder Verarbeitungseinheit, die an den Fördereinrichtungen und/oder der Übergabestation vorgesehen sein können, angeschlossen sein und diese automatisiert in Abstimmung mit dem Transfer der Behälter steuern. Beispielsweise kann eine Reinigung der Behälter durch eine Reinigungseinheit, ein Wiegen der Behälter durch eine Wägeeinheit oder eine Etikettierung durch eine Etikettiereinheit gestartet werden, sobald ein Behälter auf der Ablage der Übergabestation abgesetzt ist. Nach Abschluss der Be- und/oder Verarbeitung wird das Erfassen der Behälter durch die Behälteraufnahme veranlasst und diese an die Fördereinrichtung übergeben.

Die Transportanlage und das Verfahren für den Transport von Behältern mittels einer Transfereinrichtung von zumindest einer ersten Fördereinrichtung auf eine zweite Fördereinrichtung nach der Erfindung ermöglicht eine modulare Bauweise der Transportanlage für eine einfache Anpassung an spezifische Produktionsbedingungen und Produktanforderungen. Ein Platzbedarf für die Transportanlage und somit für eine gesamte Produktionslinie kann vermindert und flexibel gestaltet werden. Dabei wird der für den Transfer von Behältern zur Verfügung stehende Raum in drei Dimensionen ausgenutzt. Zudem kann der Transfer sowie die Be- und Verarbeitung der Behälter individuell erfolgen. Dabei bildet die Transfereinrichtung eine Schnittstelle zwischen den Be- und/oder Verarbeitungseinheiten, insbesondere zwischen den Fördereinrichtungen.

Die Erfindung wurde anhand mehrerer Ausführungsvarianten und vorteilhaften Ausgestaltungen dargestellt. Die einzelnen technischen Merkmale einer Ausführungsform können durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

### Kurzbeschreibung der Zeichnungen

Eine vorteilhafte Ausführungsform der Erfindung wird im Folgenden anhand der Figuren dargestellt, die lediglich zur Erläuterung dienen und nicht einschränkend auszulegen sind. Aus den Figuren offenbar werdende Merkmale der Erfindung sollen einzeln und in jeder Kombination als zur Offenbarung der Erfindung gehörend betrachtet werden. In den Figuren zeigen:
Fig. 1: einen perspektivischen Ausschnitt einer Produktionslinie mit einer Transportanlage nach der vorliegenden Erfindung.
Fig. 2: einen perspektivischen Ausschnitt einer Transfereinrichtung der Transportanlage aus Figur 1.
Fig. 3: eine vordere Ansicht der Transfereinrichtung der Transportanlage nach Figure 2.
Fig. 4: eine Aufsicht auf die Produktionslinie mit der Transportanlage nach Figur 1.

### Bevorzugte Ausführungsformen der Erfindung

Nachfolgend wird die erfindungsgemässe Transportanlage anhand einer Ausführungsvariante einer Transfereinrichtung mit einer ersten Behälteraufnahme, einer Übergabestation und einer zweiten Behälteraufnahme beschrieben, wie es oben für eine zweite Ausführungsvariante der Transportanlage geschildert wurde. Es wird betont, dass eine erfindungsgemässe Transportanlage auch als Ausführungsvariante einer Transfereinrichtung mit nur einer Behälteraufnahme und zugehöriger Drehachse ausgebildet sein kann, wie oben für die erste Ausführungsvariante der Transportanlage geschildert. Dabei ist anstelle einer Übergabestation eine Fördereinrichtung oder eine Einheit zur Be- und/oder Verarbeitung vorgesehen.

Um Wiederholungen in den Figuren und der zugehörigen Beschreibung der verschiedenen Aspekte der Erfindung zu vermeiden, sollen beschriebene Merkmale als gemeinsam für das gezeigte Ausführungsbeispiel verstanden werden. Das Weglassen eines Aspekts in der Beschreibung oder einer Figur lässt nicht darauf schliessen, dass dieser Aspekt in dem ausgeführten Ausführungsbeispiel fehlt. Sind in einer Figur Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörenden Beschreibungstext Bezugszeichen erwähnt, die in der zugehörigen Figur nicht enthalten sind, so wird auf die vorangehenden und nachstehenden Figuren verwiesen. Gleiche Bezugszeichen in zwei oder mehreren Figuren stehen für gleiche Elemente.

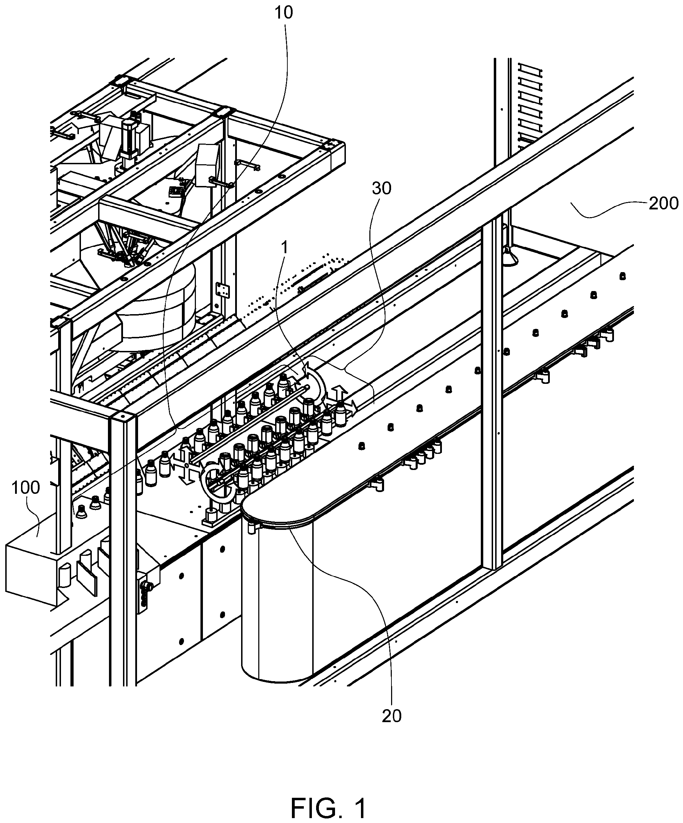

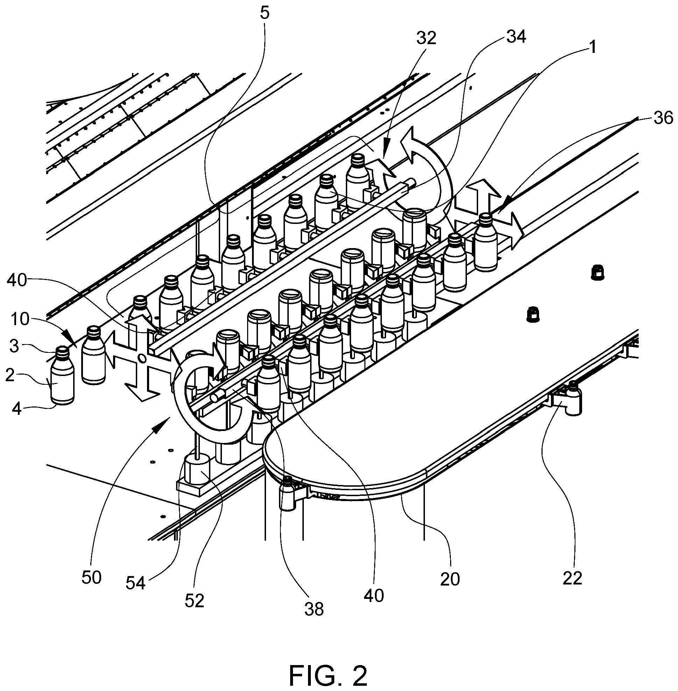

In Figur 1 ist ein Ausschnitt einer Bearbeitungslinie gezeigt, die zur Be- und Verarbeitung von beispielsweise Flüssigkeiten, Fluiden, kleinem Stückgut und dergleichen, insbesondere von pharmazeutischen Produkten, ausgelegt ist. Die Bearbeitungslinie weist eine zweite Ausführungsvariante einer Transportanlage nach der vorliegenden Erfindung auf, die für den Transport von Behältern 1 in Form von Flaschen ausgebildet ist. Die Behälter weisen in dem gezeigten Beispiel einen Behälterkörper 2, einen Behälterkopf 3 mit einer Öffnung und einen Behälterboden 4 auf (siehe z. B. Figur 2). Mittels der Transportanlage werden mehrere Behälter von einer ersten Einheit zur Be- und/oder Verarbeitung 100 zu wenigstens einer zweiten Einheit zur Be- und/oder Verarbeitung 200 transportiert. Die erste Be- und/oder Verarbeitungseinheit 100 kann beispielsweise, ein Sortierer oder eine Etikettiereinheit zum Etikettieren der Behälter 1 sein. Die zweite Be- und/oder Verarbeitungs-einheit 200 kann beispielsweise eine Befüllungseinheit sein. Die Transportanlage weist eine erste längliche Fördereinrichtung 10 und eine zweite längliche Fördereinrichtung 20 zum Fördern der Behälter 1 auf. Die erste Fördereinrichtung 10 liefert Behälter, die hintereinander in Serie angeordnet sind, in einer ersten Förderrichtung. Die zweite Fördereinrichtung 20 ist als umlaufende Fördereinrichtung ausgebildet und fördert die Behälter ebenfalls in Serie. Zwischen der ersten Fördereinrichtung 10 und der zweiten Fördereinrichtung 20 ist eine Transfereinrichtung 30 angeordnet, welche die Behälter 1 von der ersten Fördereinrichtung 10 zur zweiten Fördereinrichtung 20 transferiert.

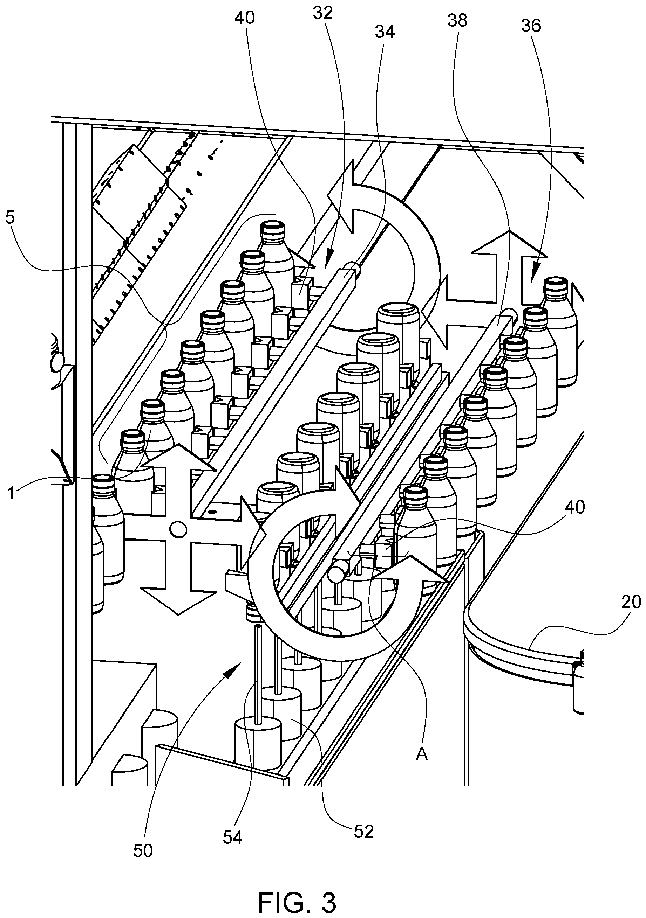

Wie in den Figuren 2 und 3 veranschaulicht ist, verlaufen die erste und die zweite Fördereinrichtung 10 und 20 in einem Parallelabschnitt 5 parallel nebeneinander. In dem gezeigten Beispiel erstreckt sich der Parallelabschnitt 2 über eine Länge von 8 in Serie angeordneten Behältern 1. Der Parallelabschnitt könnte aber auch kürzer oder länger sein und sich somit über mehr oder weniger Behälter erstrecken. Die Transfereinrichtung 30 ist in dem Parallelabschnitt 5 zwischen der ersten Fördereinrichtung 10 und der zweiten Fördereinrichtung 20 zum Transfer der Behälter 1 von der ersten Fördereinrichtung 10 zur zweiten Fördereinrichtung 20 vorgesehen.

Die Transfereinrichtung 30 weist eine erste Behälteraufnahme 32 mit einer ersten Drehachse 34 und eine zweite Behälteraufnahme 36 mit einer zweiten Drehachse 38 auf. Die erste und die zweite Behälteraufnahme 32 und 36 weisen jeweils mehrere Halteeinrichtungen 40 zum lösbaren Erfassen eines Behälters auf. Im gezeigten Beispiel sind die Halteeinrichtungen 40 als Saugeinrichtungen ausgebildet, welche jeweils einen Behälter mittels Erzeugung eines Unterdrucks an einer Saugdüse ansaugen und festhalten. Die erste Drehachse 34 und die zweite Drehachse 38 sind parallel zueinander und parallel zu den Förderrichtungen der Fördereinrichtungen 10 und 20 gelagert. Im gezeigten Beispiel verlaufen die Drehachsen 34 und 38 im Wesentlichen horizontal. Zwischen der ersten Behälteraufnahme 32 und der zweiten Behälteraufnahme 36 ist eine Übergabestation 50 mit einer Ablage 52 für jeden der zu transferierenden Behälter vorgesehen, auf der die Behälter 1 abgesetzt werden können. In dem gezeigten Beispiel ist die Ablage 52 als vertikal verlaufender, stiftartiger Halter 54 ausgebildet.

Zum Transfer der acht Behälter 1 von der ersten Fördereinrichtung 10 zur zweiten Fördereinrichtung 20 mittels der Transfereinrichtung 30 werden die Behälter 1 von der ersten Behälteraufnahme 32 in einer aufrechten Stellung erfasst, in welcher der Behälterkopf 3 oben und der Behälterboden 4 unten angeordnet ist. Durch eine Drehung um die erste Drehachse 34 werden die Behälter überkopf gedreht bis sie auf dem Kopf stehen. Das heisst, die Behälter werden im Wesentlichen um 180° gedreht bis der Behälterkopf 3 unten und der Behälterboden 4 oben liegen. In dieser Umkehrstellung, bzw. umgekehrten Zwischenstellung, werden die Behälter 1 auf der Ablage 52 der Übergabestation 20 abgesetzt. Dabei werden die Behälter über die stiftartigen Halter 54 gestülpt, sodass die Halter 54 durch die nach unten weisende Öffnung in den Behälterköpfen 3 hindurch in die Behälter 1 hineinragen. Die Behälter 1 werden von den Halteeinrichtungen 40 der ersten Behälteraufnahme 32 freigegeben und sind in der Übergabestation 50 zwischengelagert. Anschliessend werden die Behälter 1 mittels der Halteeinrichtungen 40 der zweiten Behälteraufnahme 36 in der umgekehrten Zwischenstellung erfasst und um die zweite Drehachse 38 überkopf gedreht. Dabei werden die Behälter 1 von der Umkehrstellung, bzw. der umgekehrten Zwischenstellung, in eine aufrechte Stellung gedreht, in der sie an die zweite Fördereinrichtung 20 abgegeben werden. Die zweite Fördereinrichtung 20 erfasst einen Behälter 1 beispielsweise mittels einzelnen Greifern 22 und transportiert sie entlang der zweiten Förderrichtung unabhängig voneinander ab.

Wie in Figur 3 ersichtlich ist, werden die Behälter 1 in einem Abstand A von den Drehachsen 34 und 38 an den Haltern 40 gehalten. Vorteilhaft kann der Abstand A an Transportvorgaben und Behälterdimensionen angepasst werden. Weiter ist es möglich, die Behälter 1 unabhängig voneinander an die zweite Fördereinrichtung 20 abzugeben, bzw. unabhängig voneinander von dieser abtransportiert zu werden.

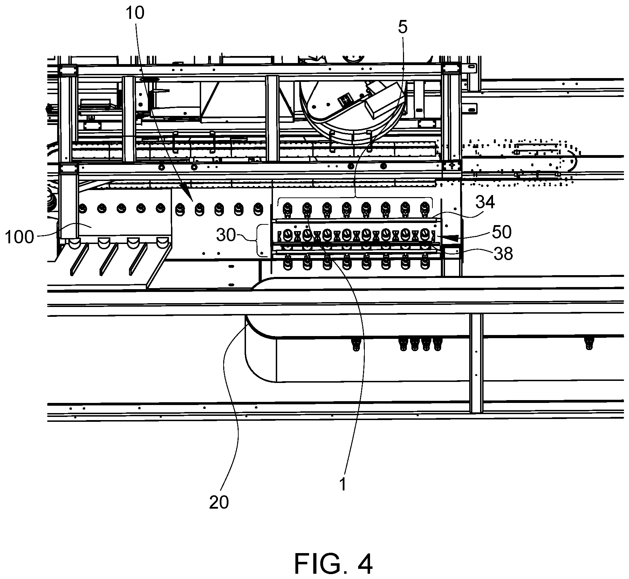

Figur 4 zeigt eine Aufsicht auf die Transportanlage mit der ersten Fördereinrichtung 10, der zweiten Fördereinrichtung 20 und der Transfereinrichtung 30. Darin ist ersichtlich, dass der Parallelbereich 5 geradlinig verläuft und sich über etwa die Hälfte der Länge der ersten Fördereinrichtung 10 erstreckt. Die Länge der Überlappung der Fördereinrichtungen im Parallelbereich kann bei der Gesamtlänge der Transportanlage eingespart werden. Behälter 1, die aus der Be- und/oder Verarbeitungseinheit 100 gefördert werden, stehen somit nach einer kurzen Förderstrecke für den Transfer zur Verfügung. Weiter ist ersichtlich, dass die Übergabestation 50 im Wesentlichen mittig zwischen der ersten Fördereinrichtung 10 und der zweiten Fördereinrichtung 20 angeordnet ist.

In dem gezeigten Ausführungsbeispiel der Transportanlage nach der Erfindung ist die Übergabestation 50 als Reinigungseinheit ausgebildet. Hierfür sind die stiftförmigen Halter 54 an ihrem in die Behälter 1 hineinragenden Ende mit einer Reinigungsdüse ausgebildet (nicht gezeigt), die z. B. an Druckluft oder ein Reinigungsmittel angeschlossen ist. Nach einem Reinigungsvorgang werden die Behälter 1 von der zweiten Behälteraufnahme 36 entgegengenommen und mittels der zweiten Fördereinrichtung 20 beispielsweise zur Befüllungseinheit gefördert.

Wie oben beschrieben, kann die Transportanlage mittels einer Steuereinheit gesteuert werden, so dass ein automatisierter Transport zwischen der Be- und/oder Verarbeitungseinheit 100, der Reinigungseinheit an der Übergabestation 50 und der Be- und/oder Verarbeitungseinheit 200 erfolgen kann. Insbesondere kann der Transfer von der ersten Fördereinrichtung 10 zur zweiten Fördereinrichtung 20 automatisiert erfolgen, wobei jeder Behälter individuell transferiert werden kann oder alle Behälter im Parallelabschnitt 5 synchron transferiert werden können.

Wie eingangs betont, können die Merkmale der Transfereinrichtung 30 mit zwei Behälteraufnahmen und Übergabestation analog auf eine Transfereinrichtung mit nur einer Behälteraufnahme übertragen werden, wie es bei der oben erläuterten ersten Ausführungsvariante der Transportanlage vorgesehen ist. In diesem Fall werden die Behälter von einer ersten Fördereinrichtung in einer aufrechten Stellung oder einer Umkehrstellung in den Parallelabschnitt der Transportanalage gefördert, dort von der Behälteraufnahme erfasst und um die Drehachse gedreht. Anstelle der Übergabestation werden die Behälter in der um 180° gedrehten Stellung, also in einer Umkehrstellung, bzw. einer aufrechten Stellung, an die zweite Fördereinrichtung abgegeben. Die Behälteraufnahme kann daher der ersten Behälteraufnahme 32 oder der zweiten Behälteraufnahme 36 entsprechen. Eine der Fördereinrichtungen kann dabei z. B. mit einer Ablage analog der Ablage 52 ausgebildet sein und zumindest überwiegend vertikal verlaufende, stiftartige Halter 54 aufweisen, die entlang der Fördereinrichtung beweglich sind.

Weiter kann eine Transportanlage nach der Erfindung auch eine dritte Fördereinrichtung, die in einem zweiten Parallelabschnitt zumindest teilweise parallel neben der ersten oder zweiten Fördereinrichtung verläuft, und eine zweite Transfereinrichtung, die analog der ersten Transfereinrichtung 30 ausgebildet ist aufweisen. Auch die dritte Fördereinrichtung kann Bestandteil einer Be- und/oder Verarbeitungseinheit der Produktionsanlage sein und somit nur eine Behälteraufnahme umfassen, wie für die erste Ausführungsvariante der Transportanlage beschrieben.

**Bezugszeichen**

| | | | |
|---|---|---|---|
| 1 | Behälter | 36 | zweite Behälteraufnahme |
| 2 | Behälterkörper | | |
| 3 | Behälterkopf | 38 | zweite Drehachse |
| 4 | Behälterboden | 40 | Halteeinrichtung |
| 5 | Parallelabschnitt | 50 | Übergabestation |
| 10 | erste Fördereinrichtung | 52 | Ablage |
| 20 | zweite Fördereinrichtung | 54 | Halter |
| 22 | Greifer | 100 | erste Verarbeitungseinheit |
| 30 | Transfereinrichtung | 200 | zweite Verarbeitungseinheit |
| 32 | erste Behälteraufnahme | | |
| 34 | erste Drehachse | A | Abstand |

## Patentansprüche

1. Transportanlage für den Transport von Behältern (1), die zumindest eine erste Fördereinrichtung und eine zweite Fördereinrichtung zum Fördern von Behältern (1) aufweist, **dadurch gekennzeichnet, dass**
- die erste und die zweite Fördereinrichtung in einem Parallelabschnitt (5) zumindest teilweise parallel nebeneinander angeordnet sind und in dem Parallelabschnitt (5) zwischen der ersten Fördereinrichtung und der zweiten Fördereinrichtung eine Transfereinrichtung (30) zum Transfer von Behältern (1) von der ersten Fördereinrichtung zur zweiten Fördereinrichtung vorgesehen ist,
- die Transfereinrichtung (30) wenigstens eine Behälteraufnahme mit einer Drehachse zum lösbaren Erfassen wenigstens eines Behälters (1) aufweist, wobei die Drehachse parallel zu einer Förderrichtung wenigstens einer der Fördereinrichtungen verläuft, wobei
- der wenigstens eine Behälter (1) an der ersten Fördereinrichtung vorgesehen und von der Behälteraufnahme erfassbar ist sowie von der wenigstens einen Behälteraufnahme durch Drehung der Behälteraufnahme um die Drehachse umkehrbar und an die zweite Fördereinrichtung abgebbar ist.

2. Transportanlage nach Anspruch 1, **dadurch gekennzeichnet, dass** zumindest eine erste Fördereinrichtung (10) und eine zweite Fördereinrichtung (20) in dem Parallelabschnitt (5) zumindest teilweise parallel nebeneinander verlaufen und die Transfereinrichtung (30) eine erste Behälteraufnahme (32) mit einer ersten Drehachse (34) und eine zweite Behälteraufnahme (36) mit einer zweiten Drehachse (38) zum lösbaren Erfassen wenigstens eines Behälters (1) aufweist, wobei die erste Drehachse (34) und die zweite Drehachse (38) parallel zueinander und parallel zu einer Förderrichtung wenigstens einer der Fördereinrichtungen (10, 20) verlaufen, und
- zwischen der ersten und der zweiten Behälteraufnahme (32, 36) eine Übergabestation (50) mit wenigstens einer Ablage (52) zum Absetzen des wenigstens einen Behälters (1) vorgesehen ist, wobei
- der wenigstens eine Behälter (1) von der ersten Behälteraufnahme (32) von einer aufrechten Stellung durch Drehung um die erste Drehachse (34) in einer umgekehrten Zwischenstellung in der Übergabestation (50) absetzbar ist und von der zweiten Behälteraufnahme (36) von der umgekehrten Zwischenstellung durch Drehung um die zweite Drehachse (38) in einer aufrechten Stellung an die zweite Fördereinrichtung (20) abgebbar ist.

3. Transportanlage nach Anspruch 1 oder 2, **dadurch gekennzeichnet, dass** die Drehachse der wenigstens einen Behälteraufnahme zumindest überwiegend horizontal verlaufen.

4. Transportanlage nach einem der vorhergehenden Ansprüche, **dadurch gekennzeichnet, dass** die wenigstens eine Behälteraufnahme (32, 36) mehrere Halteeinrichtungen (40) entlang der Drehachse (34, 38) zum lösbaren Halten mehrerer Behälter (1) aufweisen.

5. Transportanlage nach einem der vorhergehenden Ansprüche, **dadurch gekennzeichnet, dass** sich der Parallelabschnitt (5) über eine Länge von mehreren in Serie geförderten Behältern (1) erstreckt und die wenigstens eine Behälteraufnahme (32, 36) mehrere Halteeinrichtungen (40) für die mehreren in Serie geförderten Behälter (1) entlang der Drehachse (34, 38) aufweist.

6. Transportanlage nach einem der vorhergehenden Ansprüche, **dadurch gekennzeichnet, dass** eine Halteeinrichtung (40) zum lösbaren Halten eines Behälters (1) als Greifer mit zueinander beweglichen Greifbacken ausgebildet ist.

7. Transportanlage nach einem der vorhergehenden Ansprüche 1 bis 5, **dadurch gekennzeichnet, dass** eine Halteeinrichtung (40) zum lösbaren Halten eines Behälters (1) mit Magnetelementen zum magnetischen Halten eines Behälters (1) oder mit einer Saugeinrichtung zum Ansaugen eines Behälters (1) ausgebildet ist.

8. Transportanlage nach einem der vorhergehenden Ansprüche, **dadurch gekennzeichnet, dass** eine Halteeinrichtung (40) zum lösbaren Halten eines Behälters (1) radial in einem Abstand (A) zur Drehachse (34, 38) an der wenigstens einen Behälteraufnahme (32, 36) vorgesehen ist.

9. Transportanlage nach einem der vorhergehenden Ansprüche 2 bis 8, **dadurch gekennzeichnet, dass** die erste Drehachse (34) mittig zwischen der ersten Fördereinrichtung (10) und der Übergabestation (50) und die zweite Drehachse (38) mittig zwischen der Übergabestation (50) und der zweiten Fördereinrichtung (20) angeordnet ist.

10. Transportanlage nach einem der vorhergehenden Ansprüche 2 bis 9, **dadurch gekennzeichnet, dass** eine dritte Fördereinrichtung, die in einem zweiten Parallelabschnitt zumindest teilweise parallel neben der ersten Fördereinrichtung verläuft, und eine zweite Transfereinrichtung zwischen der ersten Fördereinrichtung und der dritten Fördereinrichtung zum Transfer von Behältern von der ersten Fördereinrichtung zur dritten Fördereinrichtung vorgesehen ist.

11. Transportanlage nach einem der vorhergehenden Ansprüche 2 bis 10, **dadurch gekennzeichnet, dass** die wenigstens eine Ablage (52) der Übergabestation (50) für den wenigstens einen Behälter (1) als zumindest überwiegend vertikal verlaufender, stiftartiger Halter (54) ausgebildet ist.

12. Transportanlage nach einem der vorhergehenden Ansprüche 2 bis 11, **dadurch gekennzeichnet, dass** die Übergabestation (50) eine Einheit zur Be- und/oder Verarbeitung aufweist, in welcher der wenigstens eine Behälter (1) in der umgekehrten Zwischenstellung bearbeitbar ist.

13. Transportanlage nach dem vorhergehenden Anspruch, **dadurch gekennzeichnet, dass** die Einheit zur Be- und/oder Verarbeitung als Reinigungseinheit zur Reinigung von Behältern (1) in der umgekehrten Zwischenstellung ausgebildet ist.

14. Transportanlage nach einem der vorhergehenden Ansprüche 2 bis 13, **dadurch gekennzeichnet, dass** die Ablage (52) der Übergabestation (50) wenigstens eine Reinigungsdüse aufweist, die zumindest überwiegend nach oben ausgerichtet ist.

15. Transportanlage nach dem vorhergehenden Anspruch, **dadurch gekennzeichnet, dass** die Reinigungsdüse am Ende eines zumindest überwiegend vertikal verlaufenden, stiftartigen Halters (54) ausgebildet ist, der als Ablage (52) der Übergabestation (50) zum Absetzen eines Behälters (1) vorgesehen ist.

16. Verfahren zum Transport von Behältern (1) bei dem ein oder mehrere Behälter (1) mittels einer Transfereinrichtung (30) zumindest von einer ersten Fördereinrichtung auf eine zweite Fördereinrichtung transferiert werden, **dadurch gekennzeichnet, dass** die erste und die zweite Fördereinrichtung in einem Parallelabschnitt (5) zumindest teilweise parallel nebeneinander angeordnet sind und mehrere Behälter parallel zu einer Drehachse der Transfereinrichtung an der ersten, bzw. zweiten Fördereinrichtung angeordnet werden, wobei ein oder mehrere Behälter (1) von einer Behälteraufnahme der Transfereinrichtung (30) in einer aufrechten Stellung oder einer Umkehrstellung an der ersten Fördereinrichtung erfasst, um die Drehachse überkopf gedreht und in einer Umkehrstellung, bzw. einer aufrechten Stellung an die zweite Fördereinrichtung abgegeben werden.

17. Verfahren zum Transport von Behältern (1) nach Anspruch 16, **dadurch gekennzeichnet, dass**
- ein oder mehrere Behälter (1) von einer ersten Behälteraufnahme (32) der Transfereinrichtung (30) in einer aufrechten Stellung erfasst, um eine erste Drehachse (34) überkopf gedreht und auf einer Übergabestation (50) in einer umgekehrten Zwischenstellung abgesetzt werden, und
- der eine oder die mehreren Behälter (1) von einer zweiten Behälteraufnahme (36) der Transfereinrichtung (30) in der umgekehrten Zwischenstellung erfasst, um eine zweite Drehachse (38) der zweiten Behälteraufnahme (36) überkopf gedreht und in einer aufrechten Stellung an die zweite Fördereinrichtung (20) abgegeben wird.

18. Verfahren zum Transport von Behältern nach Anspruch 16 oder 17, wobei der eine oder die mehreren Behälter (1) mittels einer Transportanlage nach einem der Ansprüche 1 bis 15 transportiert wird.

19. Verfahren zum Transport von Behältern nach Anspruch 16 bis 18, wobei durch die Drehung des einen oder der mehreren Behälter (1) überkopf durch die erste und gegebenenfalls zweite Behälteraufnahme (32, 36) durch eine Drehung um 180° erfolgt.

20. Verfahren zum Transport von Behältern nach einem der Ansprüche 16 bis 19, wobei ein Transfer von wenigstens einem Behälter (1) von der ersten Fördereinrichtung (10) zur zweiten Fördereinrichtung (20) durch eine Steuereinrichtung zum Steuern zumindest der Transfereinrichtung (30) automatisiert ausgeführt wird, insbesondere wird ein Erfassen und ein Freigeben des einen oder der mehreren Behälter (1) durch die Behälteraufnahmen (32, 36) automatisiert koordiniert.
